Europäisches Patentamt

European Patent Office

Office européen des brevets

(19)

(11) Numéro de publication: **0 194 927**
**B1**

(12) # FASCICULE DE BREVET EUROPEEN

(45) Date de publication du fascicule du brevet:
**14.09.88**

(51) Int. Cl.⁴: **B 62 D 6/02**

(21) Numéro de dépôt: **86400458.5**

(22) Date de dépôt: **05.03.86**

(54) **Dispositif asservi de contrôle de pression pour installation hydraulique, notamment pour direction assistée de véhicule.**

(30) Priorité: **13.03.85 FR 8503686**

(43) Date de publication de la demande:
**17.09.86 Bulletin 86/38**

(45) Mention de la délivrance du brevet:
**14.09.88 Bulletin 88/37**

(84) Etats contractants désignés:
**DE GB IT**

(56) Documents cités:
**EP - A - 0 072 732**
**EP - A - 0 089 512**
**DE - A - 2 412 337**
**FR - A - 2 207 481**
**FR - A - 2 275 715**

(73) Titulaire: **BENDIX France, 126, rue de Stalingrad,**
**F-93700 Drancy (FR)**

(72) Inventeur: **Kervagoret, Gilbert, 5 Impasse Nobieterre,**
**F-95100 Argenteuil (FR)**

(74) Mandataire: **Le Moenner, Gabriel et al, Division**
**Technique Service Brevets Bendix Europe 126, rue de**
**Stalingrad, F-93700 Drancy (FR)**

ACTORUM AG

## Description

La présente invention concerne les dispositifs asservis de contrôle de pression pour installation hydraulique, notamment pour direction assistée de véhicule, comprenant une source de pression dont la sortie est reliée à un système de commande de moteur hydraulique, le dispositif étant destiné à être interposé dans une conduite de dérivation entre la sortie de la source et une bâche, et comprenant un corps comportant un alésage dans lequel est monté coulissant un tiroir modulateur formant une restriction modulable entre un passage d'entrée, destiné à être relié à la sortie de la source de pression, et un passage de sortie, destiné à être relié à la bâche, les deux passages débouchant dans l'alésage, la position du tiroir étant déterminé par un organe de commande électromagnétique en fonction d'au moins un signal électrique de commande, typiquement, pour une direction assistée du véhicule, un signal fonction de la vitesse dudit véhicule.

Un dispositif asservi de contrôle de ce type est décrit dans le document DE-A-24 12 337. Dans ce dispositif connu, le tiroir modulateur est couplé mécaniquement à un plongeur de l'organe de commande électromagnétique dont la position, fonction du signal électrique de commande, commande directement la position du tiroir, dans un agencement nécéssitant d'exercer – en permanence – un champ magnétique précis et important sur le plongeur, offrant un temps de réponse faible et ne garantissant pas, en fonction notamment des fluctuations du signal électrique de commande, des risques de battements de l'équipage tiroir/plongeur soumettant ces derniers à des efforts voire des chocs rédhibitoires susceptibles d'en affecter rapidement le bon fonctionnement.

On connaît du document EP-A-0 072 732 un dispositif asservi de contrôle de pression pour direction assistée correspondant au préambule de la présente revendication 1.

La présente invention a pour objet de proposer un dispositif du type sus-mentionné, selon un agencement simple, robuste et fiable, présentant une faible inertie fonctionnelle et offrant une grande souplesse d'utilisation. Ce but est atteint grâce aux caractéristiques mentionnées dans la partie caractérisante de la revendication 1.

Selon l'une des caractéristiques de comprend un support annulaire en matériau amagnétique portant une bobine secondaire alimentée par un second circuit électrique.

Un tel agencement électrodynamique permet ainsi de contrôler efficacement et avec une grande précision la pression en fonction de paramètres à évolution relativement lente (vitesse véhicule) mais aussi, et concommitamment, à évolution très rapide, sans hystérésis (couple de braquage).

D'autres caractéristiques et avantages de la présente invention ressortiront de la description suivante d'un mode de réalisation, donné à titre illustratif mais nullement limitatif, faite en relation avec les dessins annexés, sur lesquels:

– la Figure 1 est un schéma synoptique d'une installation hydraulique de direction assistée de véhicule comportant un dispositif asservi de contrôle de pression selon l'invention; et

– la Figure 2 est une vue en coupe longitudinale d'un dispositif asservi de contrôle de pression selon l'invention.

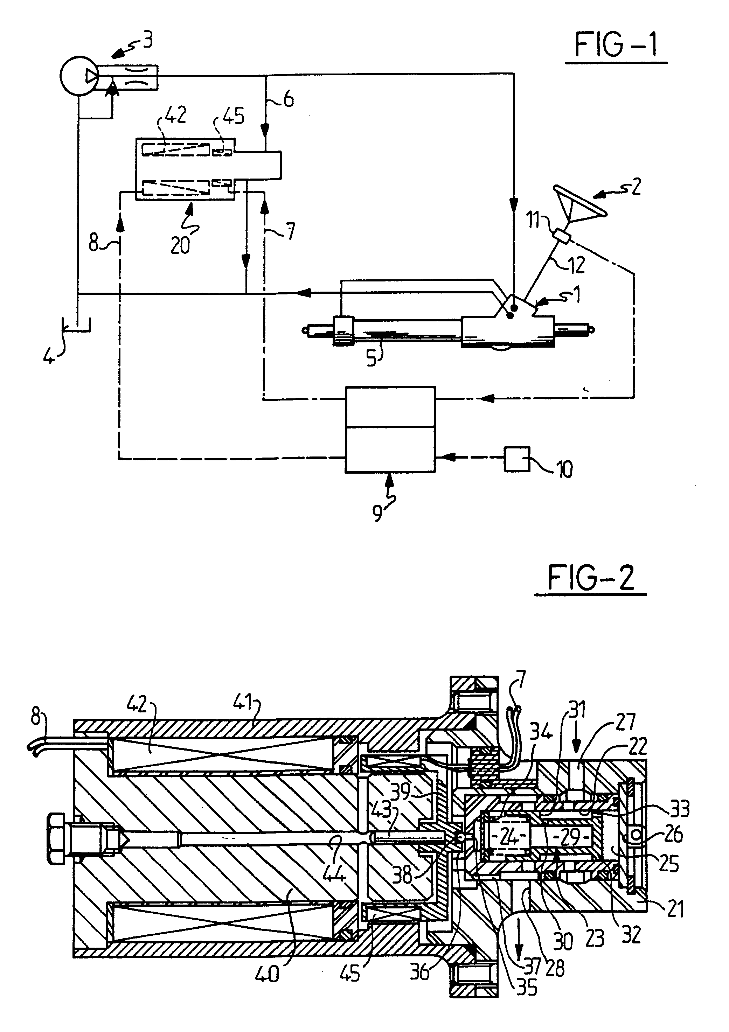

On reconnaît sur schéma de la Figure 1 un système de direction assistée de véhicule comprenant, de façon connue en soi, une servovalve de distribution 1, actionnée par le volant de direction 2, interposée entre une source de fluide sous pression 3, généralement équipée d'un dispositif régulateur de débit intégré, et une bâche 4 pour alimenter sélectivement et alternativement en fluide sous pression les chambres opposées d'un moteur hydraulique 5 d'assistance de direction. Conformément à l'invention, dans une conduite de dérivation 6 entre la sortie de la source de pression 3 et la bâche 4 est interposé un dispositif 20 contrôlant la pression fournie à la servovalve 1 en fonction d'au moins un paramètre significatif fourni par un ou plusieurs capteurs comme on le verra plus avant. De façon plus spécifique, le dispositif de contrôle de pression 20 selon l'invention est conçu pour moduler la pression fournie à la servovalve 1 en fonction de deux signaux électriques de commande distincts 7 et 8 élaborés par un bloc de commande électronique 9 en fonction de signaux fournis par deux capteurs, typiquement un capteur de vitesse véhicule 10 et un capteur 11 agencé sur la colonne de direction 12 et mesurant le couple de braquage exercé par le conducteur sur le volant 2.

Comme on le voit bien sur la Figure 2, le dispositif asservi de contrôle de pression 20 selon l'invention comprend un corps 21 comportant intérieurement un alésage 22 dans lequel est monté de façon à pouvoir coulisser un tiroir de distributeur 23 séparent l'alésage 22 en une chambre arrière borgne 24 et une chambre avant 25 fermée par un couvercle 26. Dans le corps 21 sont formés, décalés longitudinalement l'un de l'autre, un passage d'entrée 27, destiné à être relié à la portion de la conduite de dérivation 6 provenant de la source de pression 3, et un passage de sortie 28, destiné à être relié à la bâche 4.

Le tiroir 23 est formé intérieurement avec un alésage longitudinal borgne 29 ouvrant dans la chambre arrière 24 et communiquant, via une restriction fixe 30, avec une gorge périphérique annulaire 31 délimitée, du côté du distributeur 23 opposé à la chambre arrière 24, par une collerette de coulissement 32 pourvue d'un passage longitudinal de faible section 33 faisant communiquer la gorge 31 avec la chambre avant 25. Entre le fond de la chambre arrière 24 et le distributeur 23 est disposé un ressort 34 sollicitant le distributeur 23 vers la chambre avant 25 de façon à normalement interrompre la communication entre le passage de sortie 28 et la gorge périphérique 31 dont la dimension axiale est déterminée de façon à être en communication permanente avec le passage d'entrée 27. Dans le fond de la chambre 24 est ménagé un orifice traversant 35 communiquant, via une chambre 36 et un passage 37, avec le passage de sortie 28. L'extrémité arrière du passage 35 forme siège pour un élément de clapet 38 sollicité de façon à obturer sélectivement l'orifice 35. L'élément de clapet 38 est monté sur un équipage de plongeur comprenant un support annulaire en forme de cage 39 disposé dans l'entrefer d'un organe de commande électromagnétique comportant une pièce pôlaire centrale 40 et une pièce pôlaire externe 41 réalisées en matériau ferromagnétique à haute perméabilité, et une bobine 42 alimentée par un courant électrique de commande. L'équipage de plongeur comprend une tige centrale de guidage 43 montée à coulissement dans un alésage central 44 de la pièce pôlaire centrale 40. Sur la partie cylindrique de la cage 39 est disposée une bobine 45 de faible masse et susceptible d'être alimentée par un courant de commande propre. Le support-cage 39 est réalisé en un matériau amagnétique de résistivité électrique élevée et résistant à des températures élevées, par exemple dans le matériau plastique commercialisé sous l'appellation NOMEX par la Société Dupont de Nemours ou en alliage ferronickel type 72CN18–10.

Le fonctionnement du dispositif est le suivant: l'orifice 35 étant maintenu fermé, le tiroir 23, équilibré hydrauliquement, occupe une position, sous l'effet du ressort 34, interrompant toute communication vers le passage de sortie 28. Si, par contre, l'élément de clapet 38 s'ouvre, il se crée alors une fuite entre le passage d'entrée 27 et le passage de sortie 28 via la restriction 30, la chambre 24, l'orifice 35, la chambre 36 et le passage 37. Ce passage du liquide au travers de la restriction 30 déséquilibre le tiroir 23 qui se déplace alors vers la gauche (sur le dessin) à l'encontre du ressort 34 pour placer alors en communication la gorge annulaire 31 directement avec le passage de sortie 28 et constituer une restriction variable définie par la position d'équilibre nouvellement adoptée par le tiroir 23 et qui est une fonction de l'effort exercé sur l'élément de clapet 38 pour tendre à le plaquer contre son siège, cet effort étant déterminé par les courants de commande des bobinages 42 et 45.

Selon un aspect de l'invention, comme représenté sur les dessins, la bobine principale 42 reçoit les signaux électriques 8 élaborés à partir du capteur de vitesse véhicule 10, les variations de ces signaux électriques étant relativement lentes (de l'ordre de quelques Hz). Par contre, la bobine mobile 45 est commandée par les signaux électriques 7 élaborés à partir du capteur de couple de braquage 11, d'un type potentiométrique, inductif ou jauges de contraintes, ces signaux électriques de couple présentant en effet des variations très rapides (de l'ordre de 150 Hz) et sans hystérésis. Les polarisations des signaux de commande 7 et 8 sont déterminées de façon que, typiquement, la pression fournie à la servovalve de direction 1 diminue lorsque la vitesse véhicule augmente et lorsque le couple de braquage diminue.

## Revendications

1. Dispositif asservi de contrôle de pression pour installation hydraulique (I, 5), notamment pour direction assistée de véhicule, comprenant une source de pression (3) dont la sortie est reliée à un système de commande (1) de moteur hydraulique (5), le dispositif (20) étant destiné à être interposé dans une conduite de dérivation (6) entre la sortie de la source de pression (3) et une bâche (4), et comprenant un corps (21) comportant un alésage (22) dans lequel est monté coulissant un tiroir modulateur (23) formant une restriction modulable entre un passage d'entrée (27), destiné à être relié à la sortie de la source de pression (3), et un passage de sortie (28), destiné à être relié à la bâche (4), les deux passages débouchant dans l'alésage (22), la position du tiroir (23) étant déterminée, en fonction d'au moins un signal électrique de commande (7, 8), par un organe de commande électromagnétique (40, 45), le tiroir (23) comportant un passage interne (30, 29) comprenant un alésage longitudinal (29) et une restriction fixe (30), établissant une communication permanente entre le passage d'entrée (27) et une chambre pilote (24) formée dans une extrémité de l'alésage (22) et renfermant un ressort (34) sollicitant le tiroir (23) dans la direction vers l'autre extrémité (26) de l'alésage, le dispositif comportant, dans le corps (21), un conduit (36, 37) communiquant avec le passage de sortie (28) et débouchant dans la chambre pilote (24) par un siège de valve (35) sélectivement obturable par un élément de clapet (38) commandé par l'organe de commande électromagnétique (42, 45), caractérisé en ce que l'alésage longitudinal (29) communique avec une gorge annulaire périphérique (31) du tiroir par ladite restriction fixe (30), le tiroir (23) comprenant une collerette d'extrémité (32), délimitant d'un côté ladite gorge annulaire (31) et formée avec un passage de section réduite (33) établissant une communication entre la gorge (31) et une chambre borgne (25) formée dans l'autre extrémité de l'alésage (22), l'élément de clapet (38) étant solidaire d'un équipage de plongeur (39, 45) actionné par une bobine principale (42) de l'organe de commande électromagnétique alimentée par un premier circuit électrique (8), l'équipage de plongeur comprenant un support annulaire (39) en matériau amagnétique portant une bobine secondaire (45) alimentée par un second circuit électrique (7).

2. Dispositif selon la revendication 1, caractérisé en ce que les premier et second circuits électriques fournissent aux bobines respectives (42, 45) des signaux électriques (8, 7) fonction de paramètres de commande différents.

3. Dispositif selon la revendication 2, pour direction assistée de véhicule, caractérisé en ce que le premier circuit électrique (8) est relié à une unité (9) fournissant un signal fonction de la vitesse véhicule (10), le second circuit (7) étant relié à une unité (9) fournissant un signal fonction du couple de braquage du volant de direction (11).

**Patentansprüche**

1. Servovorrichtung zur Druckregelung einer hydraulischen Anlage (1, 5), insbesondere für eine Fahrzeuglenkhilfe, mit einer Druckquelle (3), deren Auslass mit einer Steuereinrichtung (1) eines hydraulischen Motors (5) verbunden ist, wobei die Servovorrichtung (20) in eine Zweigleitung (6) zwischen dem Auslass der Druckquelle (3) und einem Reservoir (4) einsetzbar ist und ein Gehäuse (21) mit einer Bohrung (22) aufweist, in der ein Regelschieber (23) gleitend gelagert ist, welcher eine veränderbare Drosselstelle zwischen einem Einlasskanal (27) und einem Auslasskanal (28) bildet, von denen der Einlasskanal mit dem Auslass der Druckquelle (3) und der Auslasskanal mit dem Reservoir (4) verbindbar ist und die beiden Kanäle in der Bohrung (22) münden, wobei die Stellung des Schiebers (23) in Abhängigkeit von mindestens einem elektrischen Steuersignal (7, 8) durch ein elektromagnetisches Steuerorgan (40, 45) bestimmt wird, wobei der Schieber (23) einen inneren Kanal (30, 29) mit einer Längsbohrung (29) und einer unveränderbaren Drosselstelle (30) aufweist, welcher eine dauernde Verbindung zwischen dem Einlasskanal (27) und einer Vorsteuerkammer (24) herstellt, die in einem Ende der Bohrung (22) gebildet ist und eine Feder (34) enthält, welche den Schieber (23) in Richtung auf das andere Ende (26) der Bohrung vorspannt, wobei die Servovorrichtung in dem Gehäuse (21) eine Leitung (36, 37) aufweist, welche mit dem Auslasskanal (28) verbunden ist und in der Vorsteuerkammer (24) mittels eines Ventilsitzes (35) mündet, der durch ein von dem elektromagnetischen Steuerorgan (42, 45) gesteuertes Verschlussglied (38) wahlweise verschliessbar ist, dadurch gekennzeichnet, dass die Längsbohrung (29) mit einer ringförmigen Umfangsnut (31) des Schiebers über die unveränderbare Drosselstelle (30) verbunden ist, wobei der Schieber (23) mit einem ringförmigen Endflansch (32) versehen ist, welcher eine Seite der Umfangsnut (31) begrenzt und mit einem querschnittsverringerten Kanal (33) versehen ist, der eine Verbindung zwischen der Umfangsnut (31) und einer Sackkammer (25) herstellt, die in dem anderen Ende der Bohrung (22) gebildet ist, wobei das Verschlussglied (38) mit einer Plungeranordnung (39, 45) fest verbunden ist, welche von einer Primärspule (42) des elektromagnetischen Steuerorgans betätigt wird, die von einem ersten elektrischen Kreis (8) gespeist wird, wobei die Plungeranordnung einen Ringträger (39) aus unmagnetischem Material aufweist, der eine Sekundärspule (45) trägt, welche von einem zweiten elektrischen Kreis (7) gespeist wird.

2. Vorrichtung nach Anspruch 1, dadurch gekennzeichnet, dass der erste und zweite elektrische Kreis ihren entsprechenden Spulen (42, 45) elektrische Signale (8, 7) in Abhängigkeit von unterschiedlichen Steuerparametern zuführen.

3. Vorrichtung nach Anspruch 2 für eine Fahrzeuglenkhilfe, dadurch gekennzeichnet, dass der erste elektrische Kreis (8) mit einer Einheit (9) verbunden ist, die ein Signal in Abhängigkeit von der Fahrzeuggeschwindigkeit (10) liefert, wobei der zweite Kreis (7) mit einer Einheit (9) verbunden ist, die ein Signal in Abhängigkeit von dem Lenkmoment des Lenkrades (11) liefert.

**Claims**

1. Servo device for controlling the pressure in hydraulic equipment (1, 5), in particular for vehicle power-assisted steering, comprising a pressure source (3) of which the output is connected to a hydraulic motor (5) control system (1), the device (20) being intended to be placed in a bypass (6) between the output of the pressure source (3) and a tank (4), and comprising a body (21) which has a bore (22) in which there is slideably mounted a slide valve modulator (23) which forms a restriction which can be modulated between an inlet passage (27) intended to be connected to the output of the pressure source (3), and an outlet passage (28) intended to be connected to the tank (4), the two passages opening out in the bore (22), and the position of the slide valve (23) being determined, as a function of at least one electrical control signal (7, 8), by an electromagnetic control member (40, 45), the slide valve (23) having an internal passage (30, 29) comprising a longitudinal bore (29) and a stationary restriction (30) establishing permanent communication between the inlet passage (27) and a pilot chamber (24) formed at one end of the bore (22) and enclosing a spring (34) pushing the slide valve (23) in the direction towards the other end (26) of the bore, the device having, in the body (21), a duct (36, 37) communicating with the outlet passage (28) and opening out in the pilot chamber (24) by way of a valve seat (35) which can selectively be closed off by a flap valve element (38) controlled by the electromagnetic control member (42, 45), characterized in that the longitudinal bore (29) communicates with a peripheral annular groove (31) of the slide valve by way of the said stationary restriction (30), the slide valve (23) comprising an end flange (32) bounding on one side the said annular groove (31) and formed with a passage of reduced section (33) establishing communication between the groove (31) and a blind chamber (25) formed in the other end of the bore (22), the flap valve element (38) being integrally formed with a plunger assembly (39, 45) activated by a main coil (42) of the electromagnetic control member, this coil being supplied by a first electrical circuit (8), the plunger assembly comprising an annular support (39) of non-magnetic material carrying a secondary coil (45) supplied by a second electrical circuit (7).

2. Device according to Claim 1, characterized in that the first and second electrical circuits supply to the respective coils (42, 45) electrical signals (8, 7) which are a function of different control parameters.

3. Device according to Claim 2 for vehicle power-assisted steering, characterized in that the first electrical circuit (8) is connected to a unit (9) which supplies a signal as a function of the vehicle speed (10), while the second circuit (7) is connected to a unit (9) supplying a signal which is a function of the torque of the steering angle of the steering wheel (11).

FIG –1

FIG –2